# EUROPEAN PATENT SPECIFICATION

(11) **EP 0 844 199 B1**
(45) Date of publication and mention of the grant of the patent: **19.02.2003**
(21) Application number: 97850160.9
(22) Date of filing: 14.11.1997
(51) Int. Cl.: B65G 15/10

(54) **Conveyor drive**
Antrieb eines Förderers
Entraînement d'un convoyeur

(30) Priority: 22.11.1996 SE 9604306
(43) Date of publication of application: 27.05.1998
(73) Proprietor: AKTIEBOLAGET ELECTROLUX (publ.), 105 45 Stockholm (SE)
(72) Inventor: Wiberg, Per-Andres, 441 65 Alingsas (SE)
(74) Representative: Erixon, Bo

(56) References cited:
- FR-A- 2 233 256
- FR-A- 2 712 269
- GB-A- 2 067 494
- GB-A- 2 082 997
- GB-A- 2 220 903

## Description

The present invention relates to a driving device in a cord conveyor, said driving device being disposed in a curve of said cord conveyor and the cord conveyor comprising two mainly parallel endless conveyor cords and means for driving said conveyor cords.

In conveying serving trays through curves of prior art cord conveyors a gear change of the speed of the outer conveyor cord must be made in order for the trays not to climb on one another which occurs when the trays are positioned one directly after the other. One way of solving this problem, known in the art, is to form, before the curve, a space between the trays, referred to as timing. In this way the trays can pass through the curve without interfering with each other.

Another way of solving the problem referred to is to disrupt the outermost conveyor cord in the curve and provide a separate more rapid conveyor cord in said curve. This separate conveyor cord is driven either separately or by a step-up gear change by means of e.g. chains and sprockets from the disrupted conveyor cord. Such type of constructive solution is relatively costly because of the need for either a separate drive or a relatively complicated step-up gear arrangement.

GB-A-2 220 903 and FR-A-2 712 269 both disclose cord conveyors including a curve in which two parallel cords are driven at different speeds so that the outer cord is running faster than the inner cord.

The object of the present invention is to provide, from a constructive point of view, an extremely simple device for driving of the trays through a curve of the cord conveyor without any need for a space to be provided between the trays which principally can be positioned one directly after the other without any interference between adjacent trays passing through the curve. The object of the invention will be realized by a device embodying the features indicated in the appending claims.

In the following embodiments of the invention will be described with reference to the accompanying drawings in which:
Fig. 1 is a perspective view of a curve of a conveyor including a first embodiment of the device according to the invention; and
Fig. 2 is a perspective view of a curve of a conveyor with an alternative embodiment of the device according to the invention.

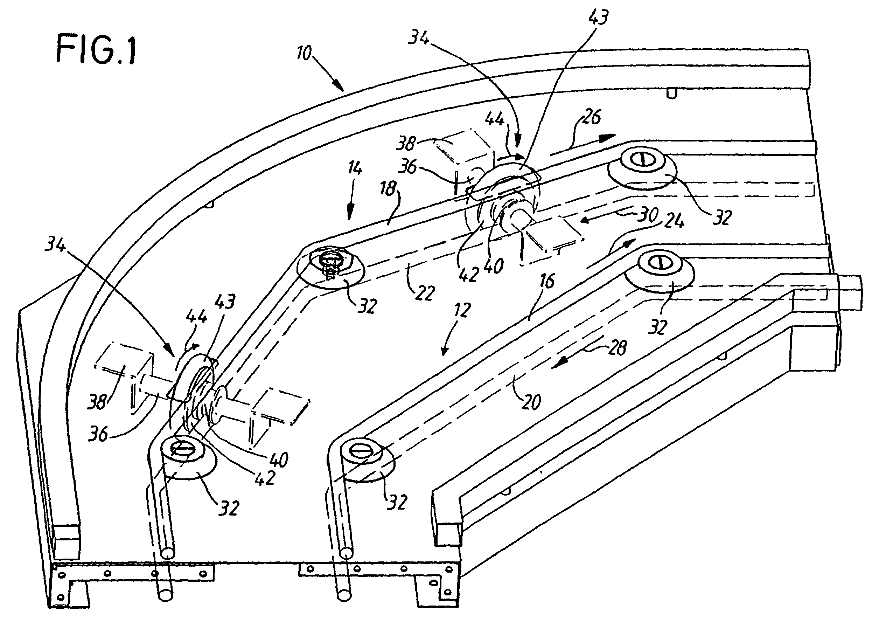

The curve 10 of a conveyor shown in Fig. 1 comprises two endless conveyor cords and, more specifically, round cords 12 and 14 driven by means not shown, e.g. an electric motor. Each one of the cords can be associated with a separate drive means or, alternatively, can a single drive means operate on both round cords 12 and 14.

Each one of the round cords 12, 14 has an upper part 16 and 18, respectively, and a lower part 20 and 22, respectively. Upper parts 16 and 18 move in the same direction, e.g. in the directions of the arrows 24 and 26, respectively, whereas the lower parts move in opposite directions, e.g. in the directions of the arrows 28 and 30, respectively. During passage of the curve 10 the round cords 12, 14 pass a number of pulleys 32. For the sake of clearness only the pulleys 32 cooperating with the upper parts 16, 18, respectively, have been shown.

In the curve 10 the outer cord 14 is associated with two drive wheels 34 which constitute essential parts of the device of the present invention. Via shafts 36 and supports 38 the drive wheels 34 are rotatably journalled in a position such that a portion 40 of reduced diameter of the wheel 34 cooperates with the lower part 22 of the round cord 14, said cooperation causing the lower part 22 of the round cord 14 to contact the portion 40 of reduced diameter with such force that the translational movement of the lower part 22 results in a rotational movement of the portion 40 and, accordingly, of the drive wheel 34 as a whole.

As seen in fig. 1, the drive wheels 34 also have a portion 42 of larger diameter, said portion 42 extending upwards through the conveyor. Suitably, the outer periphery of the portion 42 of larger diameter is coated with a friction material 43 securing that no or only minor sliding takes place between the trays and the friction material 43 of the drive wheel 34 when they co-act. The highest point of the portion 42 coated with the friction material 43 is positioned at a level somewhat above the upper part 18 of the round cord 14 whereby the portion 42 of the drive wheel 34 coated with the friction material 43 acts as a conveying means for the outer edge of the tray.

Due to the fact that the portion 40 of reduced diameter cooperates with the lower part 22 of the round cord 14 the portion 42 of larger diameter and the drive wheel 34 as a whole will rotate in the direction of the arrows 44, i.e. in the same direction as the direction of movement of the upper parts 16 and 18.

As the round cord 14 is endless it is appreciated that the upper part 18 and the lower part 22 move at the same speed but in opposite directions. The translational motion of the lower part 22 is converted into a rotational motion of the portion 40 of reduced diameter, wherein, in the ideal case, no sliding takes place between the the lower part 22 and the portion 40 of reduced diameter. In this case the peripheral speed of the portion 40 of reduced diameter equals the speed of the lower part 22. It will immediately be appreciated that the peripheral speed of the portion 42 of larger diameter is higher than the peripheral speed of the portion 40 of reduced diameter. It will also be appreciated that the peripheral speed of the portion 42 of larger diameter is higher than the speed of the upper part 18 as the upper part 18 and the lower part 22 have the same speed. The peripheral speed of the part 42 of larger diameter is also higher than that of the upper part 16 of the round cord 12 as the round cord 12 and the round cord 14 move at the same speed which is a requirement when trays are to be conveyed along straights.

The device according to the invention operates as follows. The trays are being conveyed up to the curve 10 by the upper parts 16 and 18 of the round cords 12 and 14, respectively. In the curve 10, when the outer edge of a tray reaches the first drive wheel 34, as seen in the direction of transportation, the portion 42 of larger diameter coated with the friction material 43 will take over the transport of the outer edge of the tray. As discussed above, the peripheral speed of the portion 42 of larger diameter is higher than the speed of the upper part 16 of the round cord 12. This results in that in the curve 10 the outer edge of a tray will be conveyed through the curve 10 at a higher speed than the inner edge of the tray. By such arrangement it will be avoided that the trays will climb one upon the other even in case they are following directly one after the other.

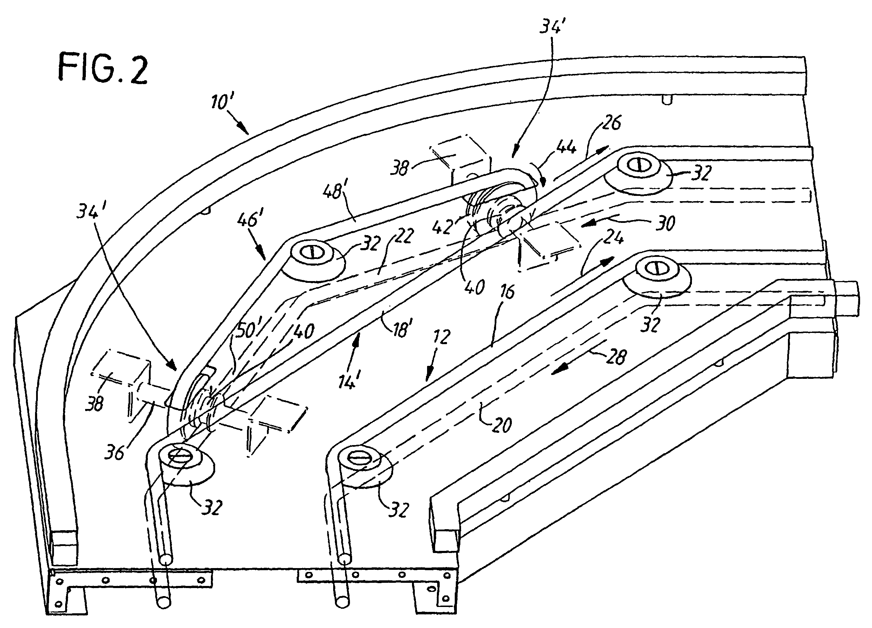

In the embodiment of Fig. 2 the device according to the invention has been constructively modified as compared to the embodiment of Fig. 1. Details which are common for both embodiments have got the same reference symbols in both figures and will not be described in detail below.

The curve 10' shown in Fig. 2 has also two endless round cords 12 and 14' driven in the same way as the round cords of Fig. 1. The round cord 12 with the parts 16 and 20 are principally identical in both embodiments. As to the round cord 14' in fig. 2, the lower part 22 is principally identical in both embodiments whereas in the embodiment of fig. 2 the upper part 18' extends in parallel to the upper part 16 of the round cord 12.

In Fig. 2 the drive wheels 34' are designed and disposed principally as in the embodiment of Fig. 1. Therefore, as to the portions 40, 42 of different diameters provided on the drive wheels 34' and the driving of the drive wheels 34' via the round cord 14' reference is made to the corresponding description of the embodiment of Fig. 1.

In the embodiment of Fig. 2 an endless separate round cord 46' extends between the drive wheels 34' and over pulleys 32. The separate round cord 46' has an upper part 48' and a lower part 50'. The upper part 48' moves in the same direction as the upper parts 16 and 18' whereas the lower part 50' moves in the same direction as the lower parts 20 and 22. In mounting of the separate round cord 46' it should be observed that its upper part 48' be positioned at a somewhat higher level than the part 18' of the round cord 14'. As a result, the upper part 48' of the round cord 46' can act as a conveying means for an outer edge of a tray which is conveyed through the curve 10'.

According to the description of the embodment of Fig. 1 the portion 42 of larger diameter has a higher peripheral speed than the portion 40 of reduced diameter. Of course, the same is valid also for the embodiment shown in fig. 2 and it will immediately be appreciated that the separate round cord 46' has a higher speed than the round cords 12 and 14'.

When a tray has been conveyed up to the curve 10' of the upper parts 16 and 18' of the two round cords 12 and 14' and, in the curve, the outer edge of a tray reaches the first drive wheel 34', as seen in the direction of transportation, the upper part 48' of the separate round cord 46' will take over the transport of the outer edge of the tray. As indicated above, this is made possible by the upper part 48' being disposed at a higher level than the upper part 18'. As the separate round cord 46' has a higher speed than the round cords 12 and 14' also the upper 48' has a higher speed than the upper part 18'. Thereby, in the curve 10', the outer edge of a tray will be conveyed through the curve 10' at a higher speed than the inner edge of said tray. By such arrangement it will be avoided that the trays are climbing one upon the other even in case they follow directly one after the other.

In both embodiments the conveyor cords are made of a material having a good friction against the trays, i.e. sliding between the conveyor cords and the trays should be avoided as far as possible.

In the embodiments described above the conveyor cords are of a type referred to as round cords. However, the invention is in no way restricted to round cords and conveyor cords of different cross-sections are also possible, e.g. square or rectangular cross-sections.

## Claims

1. A cord conveyor for the transport of tray-like objects, comprising two mainly parallel endless conveyor cords (12,14;12,14') driven by driving means at the same speed and, in a curve (10;10') of said cord conveyor passing deflecting means (32), said cord conveyor including a separate driving device disposed in said curve said driving device comprises drive wheels (34;34') provided to cooperate with the outer conveyor cord (14;14'), as referred to the center of curvature of the curve, **characterized in that** said drive wheels (34;34') are designed such that the rotational speed applied to the driving wheels (34;34') when cooperating with the outer conveyor cord (14;14') is additionally geared-up for driving of conveyor means (42,43;42,48') included in the driving device, the conveyor means (42,43;42,48') being provided for conveying of an outer edge, as referred to the center of curvature of the curve, of a tray-shaped object through said curve (10;10'), the portion of the conveyor means (42,43;42,48') cooperating with the tray-shaped object being positioned at a higher level than an upper part (18;18') of the part of the outer conveyor cord (14;14') disposed in the curve.

2. A cord conveyor according to claim 1, **characterized in that** the drive wheels (34;34') have portions (40,42) of different diameters.

3. A cord conveyor according to claim 2, **characterized in that** a portion (40) of reduced diameter of the drive wheels (34;34') cooperates with a lower part (22) of the outer conveyor cord (14;14') such that a rotational motion is applied to the drive wheel (34;34').

4. A cord conveyor according to claim 2 or claim 3, **characterized in that** a portion (42) of larger diameter of the drive wheels (34;34') is part of the conveyor means (42,43;42,48').

5. A cord conveyor according to claim 4, **characterized in that** the periphery of the portion (42) of larger diameter is coated with a friction material (43).

6. A cord conveyor according to claim 4, **characterized in that** the portions (42) of larger diameter of the drive wheels (34') receive an endless separate conveyor cord (46'), an upper part (48') of said separate conveyor cord (46') being part of the conveyor means.

7. A cord conveyor according to claim 4, **characterized in that** the endless conveyor cord (46') passes deflecting means in the shape of pulleys (32).

8. A cord conveyor according to anyone or some of the preceding claims, **characterized in that** the conveyor cords (12,14;12',14',46') are round cords.

## Patentansprüche

1. Seilförderer für den Transport von tablettartigen Gegenständen, welcher zwei im Wesentlichen parallele endlose Förderseile (12,14;12,14'), die durch Antriebsmittel mit derselben Geschwindigkeit angetrieben werden, und in einer Kurve (10;10') des besagten Seilförderers Ablenkmittel (32) umfasst, wobei der besagte Seilförderer eine getrennte Antriebsvorrichtung aufweist, die in der besagten Kurve angeordnet ist und die besagte Antriebsvorrichtung Antriebsräder (34,34') umfasst, die dazu dienen, mit dem bezüglich der Mitte der Kurvenkrümmung äußeren Seil (14;14') zusammen zu wirken, **dadurch gekennzeichnet dass,** die besagten Antriebsräder (34;34') so ausgelegt sind, dass die Rotationsgeschwindigkeit, die den Antriebsrädern (34;34') erteilt wird, wenn sie mit dem äußeren Förderseil (14;14') zusammenwirken, zusätzlich erhöht wird zum Antrieb von Fördermitteln (42,43;42,48'), die in der Antriebsvorrichtung enthalten sind, wobei die Antriebsmittel (42,43;42,48') dazu dienen, eine bezüglich der Mitte der Kurvenkrümmung äußere Kante eines tablettförmigen Gegenstandes durch die besagte Kurve (10;10') zu befördern, wobei der Bereich des Fördermittels (42,43;42,48'), der mit dem tablettförmigen Gegenstand zusammenwirkt, höher angeordnet ist als ein oberer Teil (18;18') des Teils des äußeren Förderseils (14;14'), der in der Kurve angeordnet ist.

2. Seilförderer nach Anspruch 1, **dadurch gekennzeichnet, dass** die Antriebsräder (34;34') Bereiche (40,42) mit unterschiedlichen Durchmessern aufweisen.

3. Seilförderer nach Anspruch 2, **dadurch gekennzeichnet, dass** ein Bereich (40) mit vermindertem Durchmesser der Antriebsräder (34;34') mit dem unteren Strang (22) des äußeren Förderseils (14;14') dergestalt zusammenwirkt, dass eine Drehbewegung auf das Antriebsrad (34;34') ausgeübt wird.

4. Seilförderer nach Anspruch 2 oder 3, **dadurch gekennzeichnet, dass** ein Bereich (40) mit größerem Durchmesser der Antriebsräder (34;34') Bestandteil des Fördermittels (42,43;42,48') ist.

5. Seilförderer nach Anspruch 4, **dadurch gekennzeichnet, dass** der Umfang des Bereichs (42) mit größerem Durchmesser mit einem Reibungsmaterial (43) überzogen ist.

6. Seilförderer nach Anspruch 4, **dadurch gekennzeichnet, dass** die Bereiche (42) mit größerem Durchmesser der Antriebsräder (34;34') ein getrenntes endloses Förderseil (46') aufnehmen, wobei ein oberer Strang (48') des besagten getrennten Förderseils (46') Bestandteil des Fördermittels ist.

7. Seilförderer nach Anspruch 4, **dadurch gekennzeichnet, dass** das Endlos-Förderseil (46') Ablenkmittel in Gestalt von Seilscheiben (32) passiert.

8. Seilförderer nach einem oder mehreren der vorangegangenen Ansprüche, **dadurch gekennzeichnet, dass** die Förderseile (12,14;12,14',46') Rundseile sind.

## Revendications

1. Transporteur à câbles pour le transport d'objets analogues à des plateaux, comprenant deux câbles de transporteur sans fin essentiellement parallèles (12, 14 ; 12, 14') entraînés par des moyens d'entraînement à la même vitesse et, dans une courbe (10 ; 10') dudit transporteur à câbles, passant sur des moyens de déviation (32), ledit transporteur à câbles comprenant un dispositif d'entraînement distinct disposé dans ladite courbe, ledit dispositif d'entraînement comprenant des roues d'entraînement (34 ; 34') prévues pour coopérer avec le câble de transporteur extérieur (14 ; 14'), par rapport au centre de courbure de la courbe, **caractérisé en ce que** lesdites roues d'entraînement (34 ; 34') sont conçues de sorte que la vitesse de rotation appliquée aux roues d'entraînement (34 ; 34') lorsqu'elles coopèrent avec le câble de transporteur extérieur (14 ; 14') est multipliée en outre pour entraîner des moyens de transport (42, 43 ; 42, 48') inclus dans le dispositif d'entraînement, les moyens de transport (42, 43 ; 42, 48') étant prévus pour transporter un bord extérieur, par rapport au centre de courbure de la courbe, d'un objet en forme de plateau à travers ladite courbe (10 ; 10'), la partie des moyens de transport (42, 43 ; 42, 48') coopérant avec l'objet en forme de plateau étant positionnée à un niveau supérieur à une partie supérieure (18 ; 18') de la partie du câble de transporteur extérieur (14 ; 14') disposée dans la courbe.

2. Transporteur à câbles selon la revendication 1, **caractérisé en ce que** les roues d'entraînement (34 ; 34') comportent des parties (40, 42) de diamètres différents.

3. Transporteur à câbles selon la revendication 2, **caractérisé en ce qu'**une partie (40) de diamètre réduit des roues d'entraînement (34 ; 34') coopère avec une partie inférieure (22) du câble de transporteur extérieur (14 ; 14') de sorte qu'un mouvement de rotation est appliqué à la roue d'entraînement (34 ; 34').

4. Transporteur à câbles selon la revendication 2 ou la revendication 3, **caractérisé en ce qu'**une partie (42) de plus grand diamètre des roues d'entraînement (34 ; 34') fait partie des moyens de transport (42, 43 ; 42, 48').

5. Transporteur à câbles selon la revendication 4, **caractérisé en ce que** la périphérie de la partie (42) de plus grand diamètre est revêtue d'un matériau de frottement (43).

6. Transporteur à câbles selon la revendication 4, **caractérisé en ce que** les parties (42) de plus grand diamètre des roues d'entraînement (34') reçoivent un câble de transporteur sans fin distinct (46'), une partie supérieure (48') dudit câble de transporteur distinct (46') faisant partie des moyens de transport.

7. Transporteur à câbles selon la revendication 4, **caractérisé en ce que** le câble de transporteur sans fin (46') passe sur des moyens de déviation sous forme de poulies (32).

8. Transporteur à câbles selon l'une quelconque ou certaines des revendications précédentes, **caractérisé en ce que** les câbles de transporteur (12, 14 ; 12', 14', 46') sont des câbles ronds.
